# EUROPEAN PATENT APPLICATION

(11) **EP 1 612 761 A2**
(43) Date of publication of application: **04.01.2006**
(21) Application number: 05251365.2
(22) Date of filing: 08.03.2005
(51) Int. Cl.: G09G 3/28

(54) **Drive circuit for a plasma display apparatus**

(30) Priority: 01.07.2004 JP 2004195409
(71) Applicant: Fujitsu Hitachi Plasma Display Limited, Kawasaki-shi, Kanagawa 213-0012 (JP)
(72) Inventor: Onozawa, Makoto, Takatsu-ku Kawasaki Kanagawa 213-0012 (JP); Ohki, Hideaki, Totsuka-ku Yokohama Kanagawa 244-0817 (JP); Okada, Yoshinori, Takatsu-ku Kawasaki Kanagawa 213-0012 (JP)
(74) Representative: Wilding, Frances Ward

(57) **Abstract**

A drive circuit, for a display apparatus, capable of preventing the occurrence of malfunctions, when the power is turned on, and the destruction of an output device. The drive circuit comprises an edge pulse generation circuit (31) for generating a front edge pulse and a back edge pulse of an input signal, a first level shift circuit for converting the front edge pulse, a second level shift circuit for converting the back edge pulse, a logic circuit, a flip-flop circuit (33), a setup resistor (R4) connected to a signal line in the flip-flop circuit or in the post stage of the flip-flop circuit, an output amplifier circuit connected to the post stage of the setup resistor, and an output device connected to the output amplifier circuit, wherein a capacitive load of the display apparatus is driven by the output device and the setup resistor is connected between the power supply signal line of the output amplifier circuit and the signal line.

## Description

### BACKGROUND OF THE INVENTION

The present invention relates to a drive circuit for a display apparatus and to a plasma display apparatus and, more particularly, to an improvement in the timing of a drive signal for causing a sustain discharge to occur.

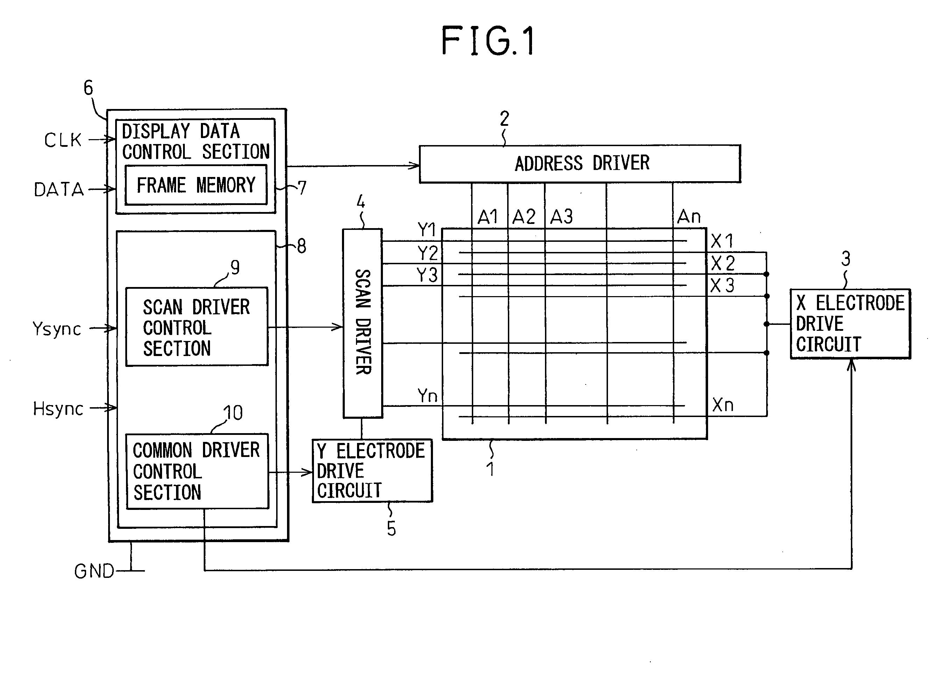

The plasma display apparatus has been put into practical use as a flat display and is expected to act as a thin display with high luminance. Fig.1 is a diagram showing the general configuration of a conventional three-electrode AC-driven type plasma display apparatus. As shown schematically, the plasma display apparatus comprises a plasma display panel (PDP) 1 constituted of two substrates having a plurality of X electrodes (X1, X2, X3, ..., Xn) and a plurality of Y electrodes (Y1, Y2, Y3, ..., Yn) arranged adjacently, a plurality of address electrodes (A1, A2, A3, ..., Am) arranged in the direction perpendicular to that of the X and Y electrodes, and phosphors arranged at the crossings of the electrodes, wherein a discharge gas is sealed in between the two substrates, an address driver 2 that applies an address pulse to the address electrode, an X electrode drive circuit 3 that applies a sustain discharge pulse to the X electrode, a scan driver 4 that applies a scan pulse sequentially to the Y electrode, a Y electrode drive circuit 5 that supplies a sustain discharge pulse to be applied to the Y electrode to the scan driver 4, and a control circuit 6 to control each part, wherein the control circuit 6 further comprises a display data control section 7 including a frame memory and a drive control section constituted of a scan driver control section 9 and a common driver control section 10. The X electrode drive circuit 3 and the Y electrode driver circuit 5 are provided with a sustain circuit that outputs a sustain pulse and the sustain circuit has a sustain output device. As the plasma display apparatus is widely known, a more detailed description of the whole apparatus is not given here but only the X electrode drive circuit 3 and the Y electrode drive circuit 5 relating to the present invention are further explained. The X electrode drive circuit, the scan driver, and the Y electrode drive circuit of the plasma display apparatus are disclosed in, for example, European Patent No. 1139323. United States Patent No. 5,502,412 discloses a power transistor drive circuit and an IC, which integrally incorporates the power transistor drive circuits into one chip, to be used in such a driver.

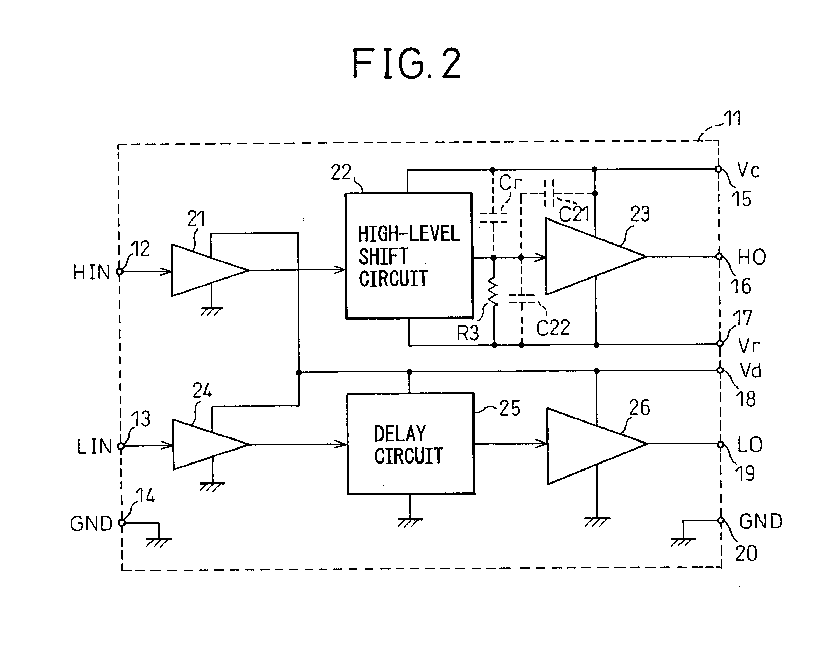

Fig.2 is a block diagram showing the general configuration of a power transistor drive circuit disclosed in United States Patent No. 5,502,412, and as shown by the broken line, the whole is provided in an IC 11. In the plasma display apparatus, the power transistor drive IC shown in Fig.2 is used as a pre-drive circuit for driving the sustain output device. The power transistor drive IC 11 shown in Fig.2 amplifies a high-level input signal HIN in an input circuit 21, converts the signal into a voltage on the basis of a high-level reference voltage Vr in a high-level shift circuit 22, and outputs the voltage as a high-level output voltage HO via an output amplifier circuit 23. Moreover, the power transistor drive IC amplifies a low-level input signal LIN in an input amplifier circuit 24 and, after inputting the signal to an output amplifier circuit 26 via a delay circuit 25 and amplifying the signal therein, outputs the signal as a low-level output voltage LO. Reference numerals 12 and 13 denote the input terminals of the high-level input signal HIN and the low-level input signal LIN, reference numerals 16 and 19 denote the output terminals of the high-level output voltage HO and the low-level output voltage LO, reference numeral 15 denotes the supply terminal of a high-level power supply voltage Vc, reference numeral 17 denotes the supply terminal of the high-level reference voltage Vr, reference numeral 18 denotes the supply terminal of a low-level power supply voltage Vd, and reference numeral 20 denotes the ground terminal.

In the power transistor drive IC shown in Fig.2, the delay circuit 25 serves to adjust a difference tdLH (HO) in rise time between the high-level input signal HIN and the high-level output voltage HO so as to be equal to a difference tdLH (LO) in rise time between the low-level input signal LIN and the low-level output voltage LO. Further, the delay circuit 25 serves also to adjust a difference tdHL (HO) in fall time between the high-level input signal HIN and the high-level output voltage HO so as to be equal to a difference tdHL (LO) in fall time between the low-level input signal LIN and the low-level output voltage LO.

When the power transistor drive IC shown in Fig.2 is used as a pre-drive circuit in a plasma display apparatus, sustain output devices such as a power MOSFET or an IGBT (Insulated Gate Bipolar Transistor) are connected to the output terminals 16 and 19 thereof. In the plasma display apparatus (PDP apparatus), a sustain pulse is generated by turning on/off the sustain output device and the generated sustain pulse is supplied to the X electrode and the Y electrode of the plasma display panel (PDP).

In Fig.2, reference symbol C21 denotes a parasitic capacitor between the output terminal of the high-level shift circuit 22 and the power supply terminal (line) of the output amplifier circuit 23 and reference symbol C22 denotes a parasitic capacitor between the output terminal of the high-level shift circuit 22 and the reference voltage terminal (line) of the output amplifier circuit 23. These parasitic capacitors are formed by the devices used to constitute the output section of the high-level shift circuit 22 and the input section of the output amplifier circuit 23. Reference symbol R3 denotes a setup resistor for turning the output voltage to the "low (L)" level (that is, the voltage between the terminals 16 and 17 is about 0 V) when the power is turned on.

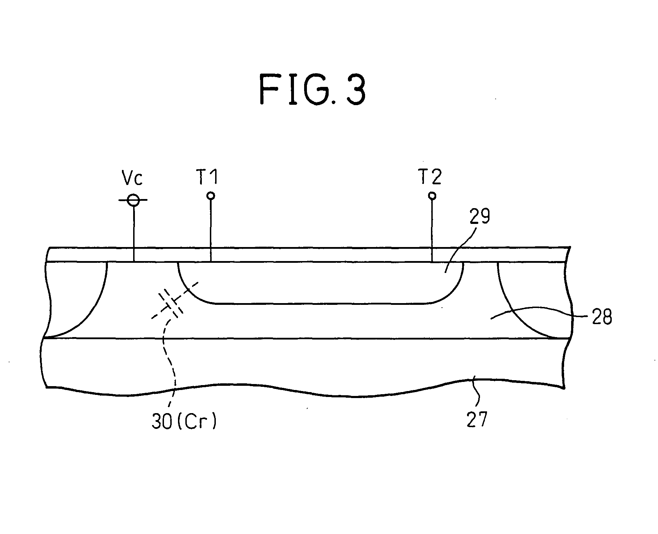

In the related art circuit, a setup resistor R3 is realized by a diffused resistor. Fig.3 show a sectional view of a diffused resistor formed on the IC substrate. As shown in Fig.3, an N-type diffused layer 28 is provided on a P-type substrate 27 and a P-type diffused resistor layer 29 is provided thereon. Terminals T1 and T2 are provided at two separate points on the P-type diffused resistor layer 29 as terminals of the resistor. As the N-type diffused layer 28 is connected to the power supply voltage line Vc, a parasitic capacitor Cr is formed between the power supply voltage terminal Vc and the P-type diffused resistor layer 29 (diffused resistor).

Therefore, if the diffused resistor is used as the setup resistor R3 shown in Fig.2, the parasitic capacitor Cr of the diffused resistor is connected between the output section of the high-level shift circuit 22 and the power supply voltage line Vc, that is, in parallel to a capacitor C1, as shown in Fig.2.

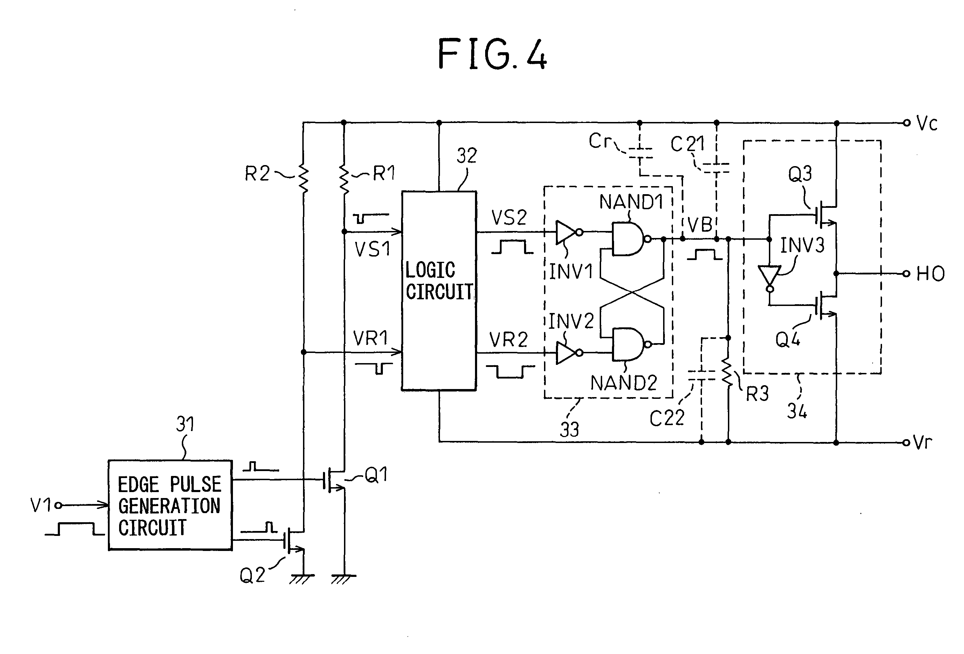

Fig.4 shows the detail of the related art circuit configuration in which the setup resistor R3 constituted of the diffused resistor is provided between the high-level shift circuit and the output amplifier section shown in Fig.2. In the circuit shown in Fig.4, an edge pulse generation circuit 31 detects the front edge of an input signal V1 and generates a front edge pulse that rises at the front edge and has a predetermined pulse width. The front edge pulse is inputted to a transistor Q1, converted into a signal VS1, and then is supplied to a logic circuit 32. The edge pulse generation circuit 31 further detects the back edge of the input signal V1 and generates a back edge pulse that rises at the back edge and has a predetermined pulse width. The back edge pulse is inputted to a transistor Q2, converted into a signal VR1, and then is supplied to the logic circuit 32. The transistors Q1 and Q2 are referred to as first and second level shift circuits, respectively.

The logic circuit 32 generates a set signal VS2 that rises at the front edge of the signal VS1 and falls at the front edge of the signal VR1 and a reset signal VR2 that falls at the front edge of the signal VS1 and rises at the front edge of the signal VR1. Moreover, the logic circuit 32 has a simultaneously active output preventing function that prevents the signals VS1 and VR1 from turning to the H level simultaneously.

The set signal VS2 and the reset signal VR2 are inputted to a flip-flop circuit 33. The flip-flop circuit 33 comprises inverter circuits INV1 and INV2, and NAND circuits NAND1 and NAND2, and generates a signal VB that rises at the rise edge of the set signal VS2 and falls at the rise edge of the reset signal VR2.

In the circuit shown in Fig.4, the transistors Q1 and Q2 (the first and second level shift circuits) are required to be on only while the front edge pulse and the back edge pulse generated by the edge pulse generation circuit 31 and having the predetermined pulse width exist, therefore, the time during which the transistors Q1 and Q2 are on can be shortened when the level shift operation is carried out. Due to this, the power loss caused by the transistors Q1 and Q2 and the resistors R1 and R2 can be reduced.

United States Patent No. 5,514,981 describes a circuit similar to that shown in Fig.4.

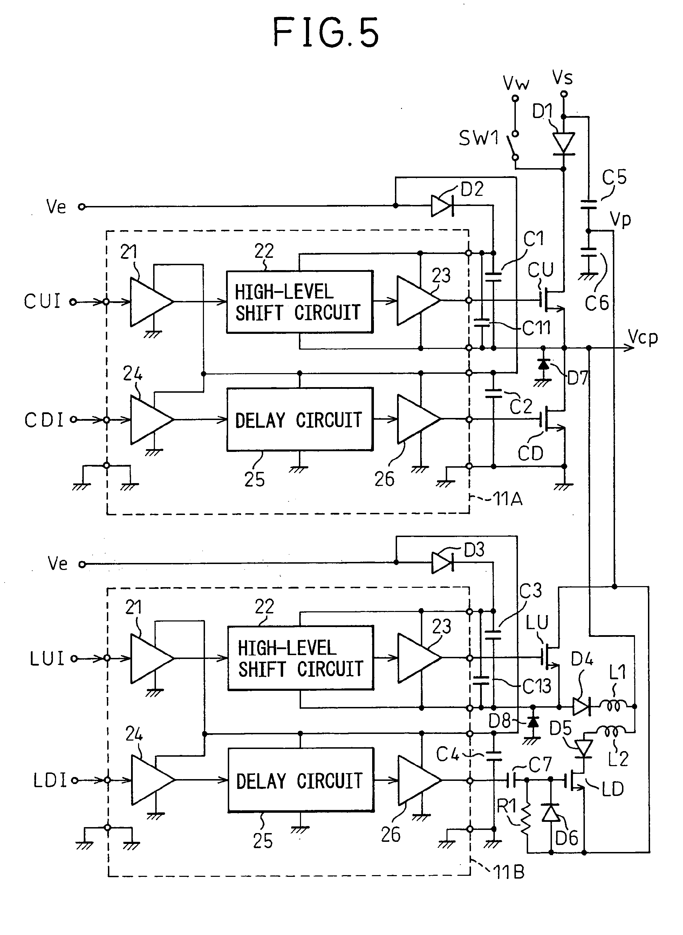

European Patent No. 1139323 describes a sustain circuit of a plasma display apparatus using the circuit configuration shown in Fig.2 and Fig.5 is a diagram showing an example thereof.

In the case where the circuit shown in Fig.2 is used in the sustain circuit shown in Fig.5, when the power of the circuit is turned on, the output voltage HO is fixed to the "high (H)" level and an abnormal current flows through an output device CU or an output device LU in the sustain circuit shown in Fig.5, and it has been found that there is the possibility that the output device CU or the output device LU may be destroyed. This is because a rush of current flows through the parasitic capacitor Cr of the diffused resistor used as the setup resistor R3 and the capacitor C21 in the circuit shown in Fig.2 and Fig.4 when the power is turned on, and the current causes a voltage to develop across both ends of the setup resistor R3 and, therefore, the output voltage HO is fixed to the H level.

In the circuit shown in Fig.5, therefore, in order to prevent malfunctions caused by the rush of current when the power is turned on, the wide-band high-frequency capacitive device C1 is connected in parallel to a low-frequency high-capacitance capacitive device C11 such as an electrolytic capacitor and the power supply voltage Vc is prevented from rising sharply to avoid malfunctions.

Also when a voltage Vcp to be supplied to the plasma display panel changes sharply toward the negative direction, there is the possibility that the output voltage HO is set to the H level. Therefore, in order to prevent the voltage Vcp from changing sharply toward the negative direction, a protective diode D7 is provided.

It is desirable to prevent output devices from being destroyed by avoiding malfunctions when the power is turned on.

It is also desirable to make it possible to prevent the output devices from being destroyed by the malfunctions without using the high-frequency capacitive device C1 and the protective diode D7 and to dispense with the use of the high-frequency capacitive device C1 and the protective diode D7.

The invention is defined in the independent claims, to which reference would be made. Preferred features are detailed in the subclaims. A drive circuit for a display apparatus according to an embodiment of a first aspect of the present invention is characterized in that when a diffused resistor is connected as a setup resistor, the resistor is connected between a power supply voltage line of an output amplifier circuit and a signal line. It is necessary that the output voltage returns to the L level when the part of the signal line to which the setup resistor is connected returns to the H level.

If connection is done as in this embodiment of the first aspect, the parasitic capacitor due to the diffused resistor is connected in parallel to the setup resistor between the power supply voltage line of the output amplifier circuit and the signal line and, as a result, the rush of current when the power is turned on is made to bypass the setup resistor and flow through the parasitic capacitor formed by the diffused resistor. Due to this, the voltage that develops across both ends of the setup resistor because of the rush of current can be reduced and it is more surely possible to set the H level by the current that flows through the parasitic capacitor formed by the diffused resistor.

A drive circuit for a display apparatus according to an embodiment of a second aspect of the present invention is characterized in that the capacitance between the output terminal of a flip-flop circuit and the power supply voltage line of the output amplifier circuit is smaller than the capacitance between the output terminal of the flip-flop circuit and the power supply voltage line that supples an output reference voltage.

In the embodiment of the second aspect, the capacitor C1 between the output terminal of the flip-flop circuit and the power supply voltage line of the output amplifier circuit and a capacitor C2 between the output terminal of the flip-flop circuit and the power supply voltage line that supplies the output reference voltage are connected in series and when the power is turned on, a rush of current flows through C1 and C2 connected in series. The voltage of the output terminal of the flip-flop circuit due to this is determined by the ratio of the capacitance of C1 to that of C2 and, therefore, if the capacitance of C2 is made greater than that of C1, the voltage that develops across both ends of C2 due to the rush of current can be reduced and malfunctions can be avoided. The capacitances of the capacitors C1 and C2 may be set by adjusting the size of the transistors in the post stage and the chip size of devices constituting the inverter circuit, or by connecting capacitive devices so that the conditions are satisfied.

A drive circuit for a display apparatus according to an embodiment of a third aspect of the present invention is characterized in that a setup resistor is constituted of a polysilicon resistor.

According to the embodiment of the third aspect, the setup resistor is constituted of a polysilicon resistor. As the polysilicon resistor is formed on the N-type diffused layer connected to the reference voltage line, there is no parasitic capacitor between the polysilicon resistor and the power supply voltage line. Therefore, the occurrence of malfunction can be suppressed.

A drive circuit for a display apparatus according to an embodiment of a fourth aspect of the present invention is characterized in that a reset delay circuit is connected to the previous or post stage of a second NAND circuit in the configuration having the flip-flop circuit shown in Fig.4.

In the circuit according to the embodiment of the fourth aspect, the output of the second NAND circuit is delayed by the reset delay circuit compared to the output of a first NAND circuit and, therefore, the output of the second NAND circuit determines the output of the flip-flop circuit. As a result, the output of the flip-flop circuit turns to the L level without fail, the output voltage also turns to the L level without fail, and thus malfunctions can be prevented.

If the above-mentioned drive circuit is used in the sustain circuit of a plasma display apparatus, the second desired effect can be attained.

### BRIEF DESCRIPTION OF THE DRAWINGS

The features and advantages of the invention will be more clearly understood from the non-limiting following description of embodiments taken in conjunction with the accompanying drawings, in which:
Fig.1 is a diagram showing the general configuration of a plasma display apparatus.
Fig.2 is a diagram showing a conventional power transistor drive IC.
Fig.3 is a sectional configuration of a diffused resistor used in a conventional case.
Fig.4 is a diagram showing a detailed configuration of a high-level shift circuit and an output amplifier circuit in a conventional case.
Fig.5 is a diagram showing the configuration of a sustain circuit in a conventional case.
Fig.6 is diagram showing the configuration of a high-level shift circuit and an output amplifier circuit in a first embodiment of the present invention.
Fig.7 is diagram showing the configuration of a high-level shift circuit and an output amplifier circuit in a second embodiment of the present invention.
Fig.8 is diagram showing the configuration of a high-level shift circuit and an output amplifier circuit in a third embodiment of the present invention.
Fig.9A and Fig.9B are diagrams showing sectional configurations of a diffused resistor used in the third embodiment.
Fig.10 is diagram showing the configuration of a high-level shift circuit and an output amplifier circuit in a fourth embodiment of the present invention.
Fig.11 is a diagram showing another configuration example of a reset delay circuit in the fourth embodiment.
Fig.12 is diagram showing the configuration of a high-level shift circuit and an output amplifier circuit in a fifth embodiment of the present invention.
Fig.13 is diagram showing the configuration of a high-level shift circuit and an output amplifier circuit in a sixth embodiment of the present invention.
Fig.14 is a diagram showing the configuration of a sustain circuit to which the configuration of the high-level shift circuit and the output amplifier circuit according to the second embodiment of the present invention is applied.
Fig.15 is a diagram showing another example of a power transistor drive IC to which the configuration of the high-level shift circuit and the output amplifier circuit according to the second embodiment of the present invention is applied.
Fig.16 is a diagram showing the configuration of a sustain circuit using the IC shown in Fig.15.

Embodiments of the present invention are described below with reference to drawings.

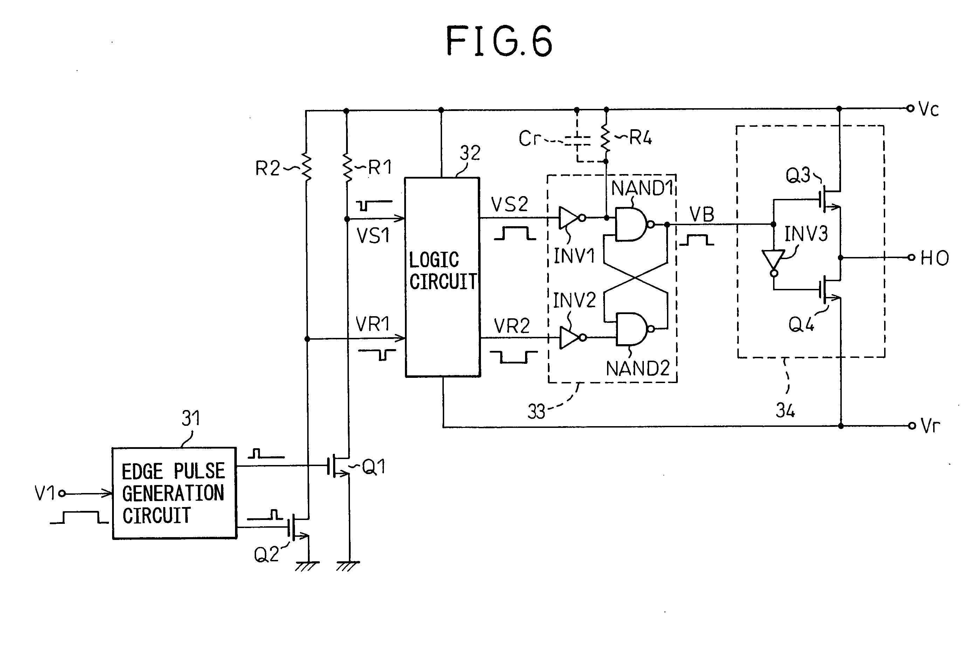

Fig.6 is a diagram showing the configuration of a level shift circuit and an output amplifier circuit in a drive circuit for a display apparatus in a first embodiment of the present invention, corresponding to Fig.4. As is obvious from comparison with Fig.4, while, in a conventional case, a setup resistor R3, which is a diffused resistor, is connected between the output of a first NAND circuit NAND 1 of a flip-flop 33 and a reference voltage line Vr, in the circuit in the first embodiment, a setup resistor R4, which is a diffused resistor, is connected between the connection point of a first inverter circuit INV1 of the flip-flop 33 and the first NAND circuit NAND 1 and a power supply voltage line Vc.

In the circuit in the first embodiment, when the output signal of INV1 is at the H level, an output voltage HO turns to the L level. In the circuit shown in Fig.6, a parasitic capacitor Cr, when a diffused resistor is used for the setup resistor R4, is connected in parallel with the setup resistor R4. Because of this, a rush of current that flows through the parasitic capacitor Cr when the power is turned on bypasses the setup resistor R4. As a result, it is possible not only to suppress the voltage that develops across both ends of the setup resistor R4 due to the rush of current when the power is turned on but also to more surely return the output voltage of INV1 to the H level because of the rush of current that flows through the parasitic capacitor Cr, therefore, it is possible to surely return the output voltage HO to the L level.

As a result, when the circuit shown in Fig.6 is applied to the drive circuit shown in Fig.2 to drive the output device of the sustain circuit shown in Fig.5, a problem of circuit destruction can be avoided, which may occur when a conventional circuit is used because the output voltage HO is fixed to the H level when the power is turned on and the output device in the post stage is brought into the on state to cause an over current to flow.

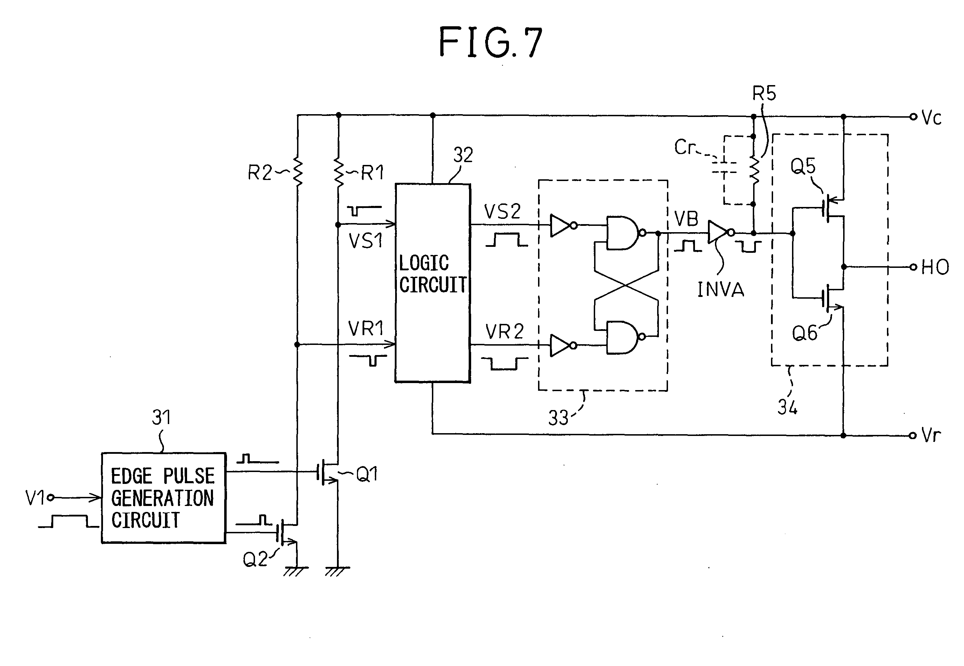

Fig.7 is a diagram showing the configuration of a level shift circuit and an output amplifier circuit in a drive circuit for a display apparatus in a second embodiment of the present invention. As is obvious from comparison with the circuit in the first embodiment shown in Fig.6, the circuit differs from that in the first embodiment in that an inverter circuit INVA for inverting the output signal of the flip-flop circuit 33 is provided, INV 3 is eliminated, an N-type transistor Q3 is replaced with a P-type transistor Q5, R4 is eliminated, and a setup resistor R5, which is a diffused resistor, is connected between the output terminal of INVA and the power supply voltage line Vc. A transistor Q6 is of as N-type, the same as the transistor Q4.

In the circuit in the second embodiment, when the gate voltage of Q5 is at the H level, Q5 turns off and Q6 turns on and the output voltage HO turns to the L level. Therefore, when a diffused resistor is used for the setup resistor R5, the parasitic capacitor Cr is connected in parallel to the setup resistor R5, as a result. Because of this, as in the first embodiment, even when the rush of current flows when the power supply voltage Vc is turned on, the gate voltage of Q5 turns to the H level and the output voltage HO turns to the L level. Therefore, it is unlikely that the output device connected to the post stage is fixed in the on state and that the output device is destroyed by the over current.

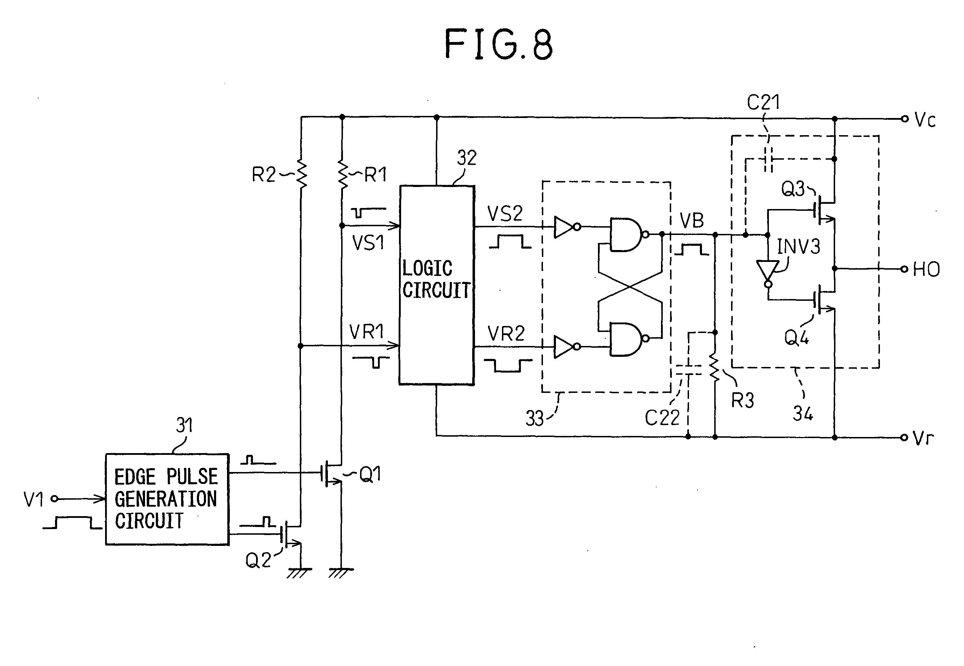

Fig.8 is a diagram showing the configuration of a level shift circuit and an output amplifier circuit in a drive circuit for a display apparatus in a third embodiment of the present invention, corresponding to Fig.4. As is obvious from comparison with Fig.4, the configuration is similar to that of the circuit shown in Fig.4 but the difference lies in that a polysilicon resistor is used for the setup resistor R3.

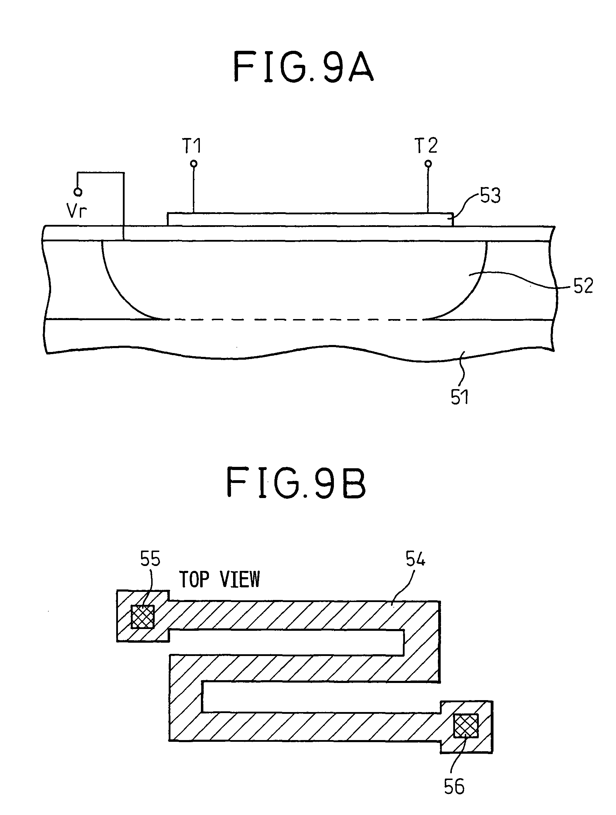

Fig.9A is a sectional view of a polysilicon resistor formed on an IC substrate and Fig.9AB is a top view of a resistor pattern. As shown in Fig.9A, a P-type diffusion layer 52 is provided on a P-type substrate 51 and a polysilicon layer 53 is provided thereon. The polysilicon layer 53 has a pattern 54 as shown in Fig.9B and terminals T1 and T2 are provided on both ends of the pattern 54 as the terminals of the resistor. The resistance is determined based on the length of the pattern 54. Here, the P-type diffusion layer 52 is connected to the reference voltage line Vr but not to the power supply voltage line Vc, therefore, a parasitic capacitance is unlikely to occur between the polysilicon layer 53 and the power supply voltage line Vc (or is so small as to be negligible). In other words, if a polysilicon resistor is used, the parasitic capacitor Cr, that is generated when a diffused resistor is used, can be eliminated. As a result, the rush of current that may flow via the parasitic capacitor Cr when the power supply voltage Vc is turned on can be reduced. Therefore, the voltage that develops across both ends of the setup resistor R3 when the power supply voltage Vc is turned on can be reduced. As a result, the output voltage HO is fixed to the H level, the output device in the post stage enters the on state, and the problem of destruction of the output device by the over-current can be avoided.

In the third embodiment, when the capacitance of a parasitic capacitor C22 is greater than the capacitance of a parasitic capacitor C21, even if the resistor R3 is eliminated, the output voltage HO is fixed to the H level, the output device in the post state enters the on state, and the problem of destruction of the output device by the over current can be avoided. This is explained below.

In Fig.8, in a state in which the setup resistor R3 is eliminated, the parasitic capacitor C21 is connected between the output terminal of the first NAND circuit of the first flip-flop 33 and the power supply voltage line Vc and the parasitic capacitor C22 is connected between the output terminal of the first NAND circuit of the first flip-flop 33 and the reference voltage line Vc. Here, it is assumed that an attempt is made to realize a desired capacitance by connecting capacitive devices to the parts of the parasitic capacitors C21 and C22, respectively. In this case, the capacitance is the combined capacitance of the parasitic capacitor and the capacitive device. Here, a description is given below on the assumption that the combined capacitor is the capacitors C21 and C22. When the power supply voltage Vc is turned on, the rush of current flows to the capacitor C2 via the capacitor C21. At this time, the voltage VB is determined by the division ratio of the capacitance of the capacitor C21 to the capacitance of the capacitor C22. Therefore, if the capacitance of the capacitor C22 is set greater than the capacitance of the capacitor C21, the voltage applied across both ends of the capacitor C22 by the of rush current can be reduced.

The above-mentioned condition may be realized by using only the parasitic capacitor without using the capacitive device. In such a case, the capacitances of the capacitors C21 and C22 can be set by adjusting the chip size of the device to be used for the transistor Q3 and in the inverter INV 3 in the post stage.

As described above, in the configuration shown in Fig.8, by appropriately setting the capacitance of the capacitors C21 and C22, it is possible to set the output voltage HO to the L level at the time of setup even if the setup resistor R3 is not provided and thus a malfunction when the power supply voltage Vc is turned on can be avoided.

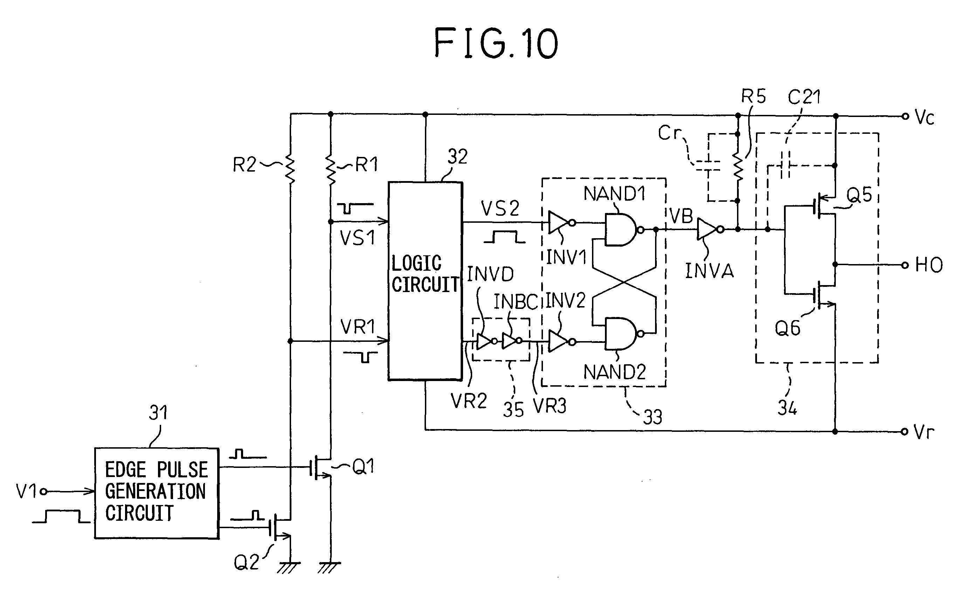

Fig.10 is a diagram showing the configuration of a level shift circuit and an output amplifier circuit in a drive circuit for a display apparatus in a fourth embodiment of the present invention. As is obvious from comparison with the circuit in the second embodiment shown in Fig.7, the circuit in the present embodiment differs from the circuit in the second embodiment in that a reset delay circuit 33 constituted of inverter circuits INVB and INVC is further provided.

In the circuit in the fourth embodiment, a signal VR3 is generated by delaying a reset signal VR2 output from a logic circuit 32 and the signal VR3 is inputted to the flip-flop circuit 33. As a result, the output signal of a second NAND circuit NAND 2 (the input signal of the first NAND circuit NAND 1) is delayed compared to the signal inputted to the first NAND circuit NAND 1 from the set signal VS2 output from the logic circuit 32 via INV1 by the amount according to the time to pass through the reset delay circuit 35. Therefore, the time at which an output signal VB of the flip-flop circuit 33 is set by the set signal VS2 is ahead of the time at which the output signal VB is reset by the reset signal VR2. Because of this, even if the set signal VS2 and the reset signal VR2 are output simultaneously such as when the power supply voltage Vc is turned on, the reset signal VR2 to be inputted later determines the voltage level of the output signal VB of the flip-flop circuit 33, therefore, the signal VB turns to the L level and the output voltage HO also turns to the L level.

Similarly, even if the set signal VS2 and the reset signal VR2 are output simultaneously, such as when the noise pulse in the negative direction is added to the output reference voltage Vr, the reset signal VR2 to be inputted later is effective for the level setting of the voltage VB because of being inputted later. Therefore, even if the set signal VS2 and the reset signal VR2 are output simultaneously such as when the noise pulse in the negative direction is added to the output reference voltage Vr, the voltage VB returns to the L level and the output voltage HO also returns to the L level.

When the reset delay circuit 35 is provided, it is possible to prevent malfunctions when the power supply voltage Vc is turned on even if the setup resistor R5 is eliminated. However, it is possible to more securely prevent malfunctions when the power supply voltage Vc is turned on by providing both the reset delay circuit 35 and the setup resistor R5.

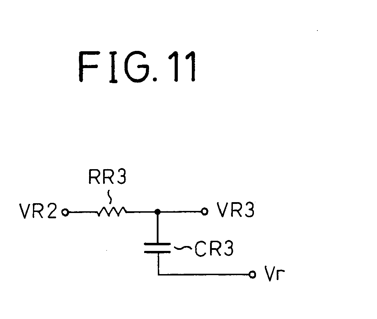

In the example described above, the inverter circuits INVB and INVC are connected in series in the reset delay circuit 35 but, preferably, the number of inverter circuits to be connected is set appropriately. Moreover, the reset delay circuit 35 can be realized by using circuits other than inverter circuits and, for example, can be realized by using a time constant circuit in which a resistor RR3 and a capacitor CR3 are connected, as shown in Fig.11.

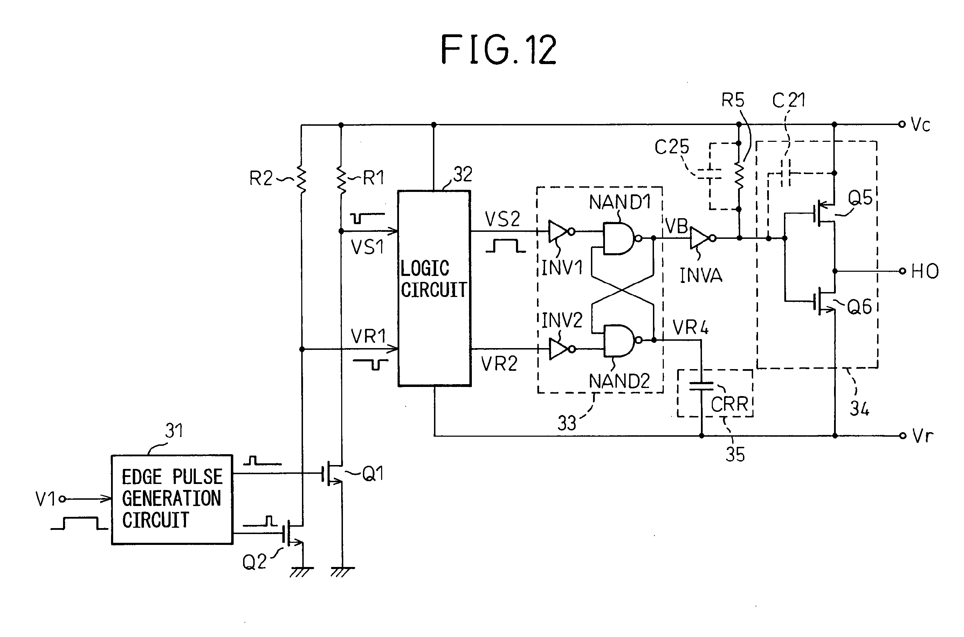

Fig.12 is a diagram showing the configuration of a level shift circuit and an output amplifier circuit in a drive circuit for a display apparatus in a fifth embodiment of the present invention. As is obvious from comparison with the circuit in the second embodiment shown in Fig.7, the circuit in the present embodiment differs from the circuit in the second embodiment in that the reset delay circuit 35 constituted of a capacitor CRR is further provided.

In the circuit in the fifth embodiment, the capacitor CRR of the reset delay circuit 35 delays the output signal of the second NAND circuit NAND 2. As a result, the output signal (the input signal of NAND 1) is delayed compared to the signal inputted to NAND from the set signal VS2 output from the logic circuit 32 l via INV1 by the amount corresponding to the passing through the reset delay circuit 35. Therefore, the time at which the output signal VB of the flip-flop circuit 33 is set by the set signal VS2 is ahead of the time at which the output signal VB is reset by the reset signal VR2. Because of this, even if the set signal VS2 and the reset signal VR2 are output simultaneously such as when the power supply voltage Vc is turned on, the reset signal VR2 to be inputted later determines the voltage level of the output signal VB of the flip-flop circuit 33. As a result, even if the set signal VS2 and the reset signal VR2 are output simultaneously such as when the power supply voltage Vc is turned on, the signal VB turns to the L level and the output voltage HO also turns to the L level.

Similarly, even if the set signal VS2 and the reset signal VR2 are output simultaneously such as when the noise pulse in the negative direction is added to the output reference voltage Vr, the voltage VB turns to the L level and the output voltage HO also turns to the L level.

As in the fourth embodiment, when the reset delay circuit 35 is provided, it is possible to prevent malfunctions when the power supply voltage Vc is turned on even if the setup resistor R5 is eliminated. However, it is possible to more securely prevent malfunctions when the power supply voltage Vc is turned on by providing both the reset delay circuit 35 and the setup resistor R5.

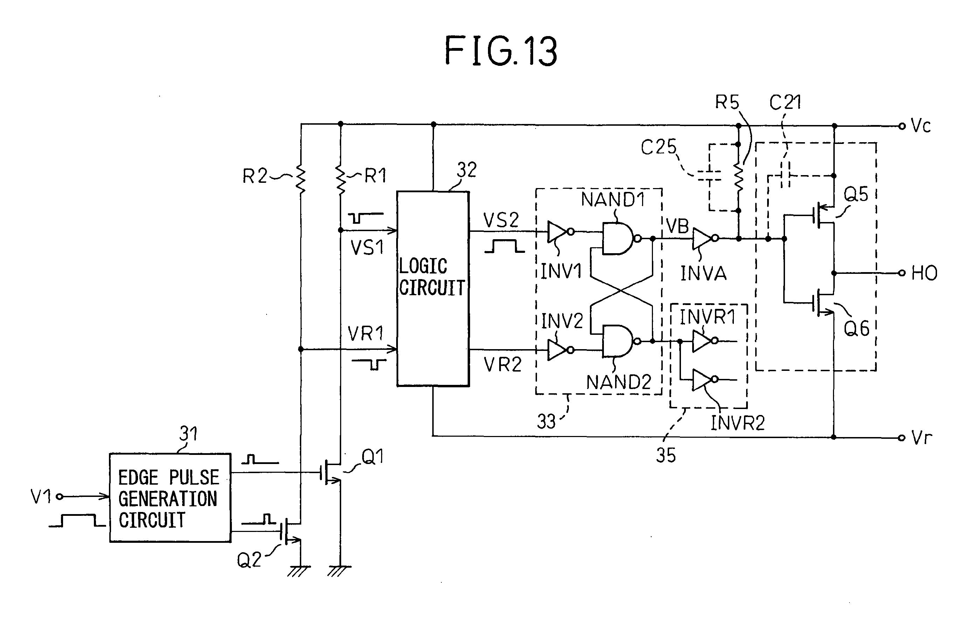

Fig.13 is a diagram showing the configuration of a shift level circuit and an output amplifier circuit in a drive circuit for a display apparatus in a sixth embodiment of the present invention. As is obvious from comparison with the circuit in the fifth embodiment shown in Fig.12, the circuit in the present embodiment differs from the circuit in the fifth embodiment in that the inverter circuits INV1 and INV2 are used as the reset delay circuit 35.

The reset delay circuit 35 in the sixth embodiment utilizes the input capacitance of the inverter circuits INV1 and INV2. As a result, as in the fifth embodiment, the output signal of NAND 2 is delayed. Here, the two inverter circuits INV1 and INV2 are connected but if the capacitance is sufficient, INV2 can be eliminated. Moreover, the number of inverter circuits can be further increased. The delay time provided by the reset delay circuit 35 can be adjusted by adjusting the number of inverter circuits provided in the reset delay circuit 35. As the operation of the circuit of the sixth embodiment is the same as that of the fifth embodiment, no description is given here.

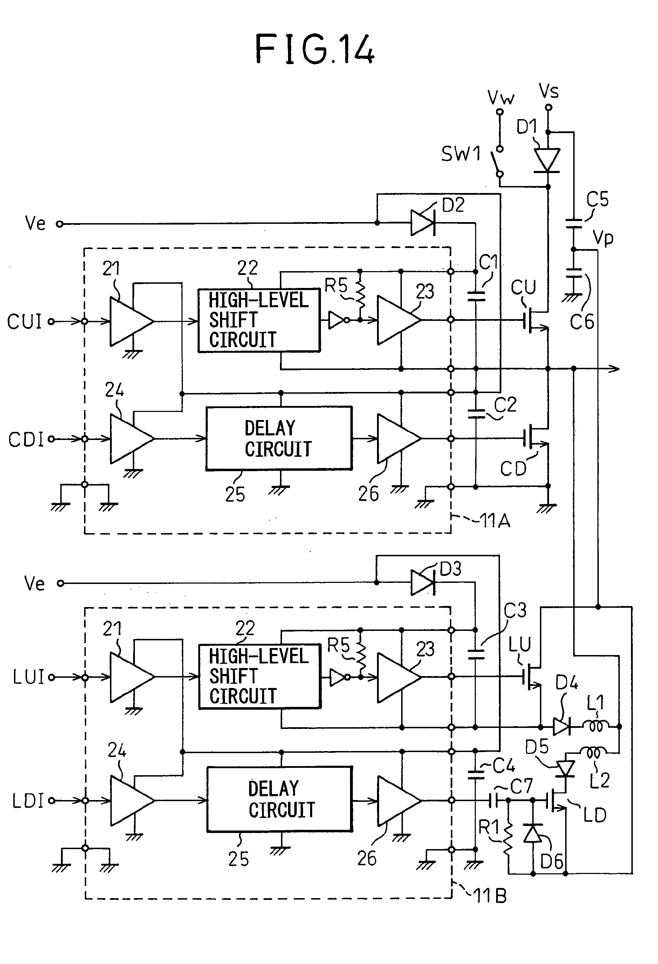

Fig.14 is a diagram showing the configuration when the configuration of the high-level shift circuit and the output amplifier circuit in the second embodiment shown in Fig.7 is applied to the X electrode drive circuit 3 and the Y electrode drive circuit 5 of the plasma display apparatus shown in Fig.1, corresponding to Fig.4. Power transistor drive ICs 11A and 11B have the configuration shown in Fig.2 to which the configuration in the second embodiment shown in Fig.7 is applied. In other words, the setup resistor R3 is removed, the inverter circuit INVA to be connected to the output terminal in the high-level shift circuit 22 is provided, the resistor R5 is connected between the output terminal of INVA and the power supply voltage line Vc, and the N-type transistor Q3 is replaced with the P-type transistor Q5. By using the above-mentioned power transistor drive ICs 11A and 11B, the output devices CU, CD, LU, and LD are driven. As described above, in the configuration in the second embodiment, the output signal HO is unlikely to be fixed to the H level due to the rush of current when the power is turned on and, therefore, in the circuit shown in Fig.14, the problem of destruction of the output devices CU and LU can be avoided, which is caused by malfunctions that may occur when the power supply voltage, which is supplied to the output amplifier circuit 23, is turned on (the drive pulse to be supplied to the output devices CU and LU is fixed to the H level) and by similar malfunctions that may occur when the noise in the negative direction is added to the reference voltage (source voltage of the output devices CU and LU) of the output amplifier circuit 23.

Moreover, in the circuit shown in Fig.14, the protective diode D7 provided in the conventional case shown in Fig.5 can be eliminated because of the reason described above. In Fig.14, a wide-range high-frequency capacitive device C1 is shown and this can also be eliminated. However, in the circuit shown in Fig.14, operations become more stable by the provision of the protective diode D7 and the wide-range high-frequency capacitive device C1.

In the application example described above, the configuration in the second embodiment is applied to the X electrode and Y electrode drive circuits (sustain circuits) of the plasma display apparatus but the configuration in Fig.1 and Fig.3 to Fig.6 can also be applied to the sustain circuit similar to the second embodiment. Moreover, in the application example described above, the case where the second embodiment is applied to the inside of the power transistor drive IC is explained, however, the same effect can also be obtained when the second embodiment is applied to a drive circuit that is not in the form of an IC.

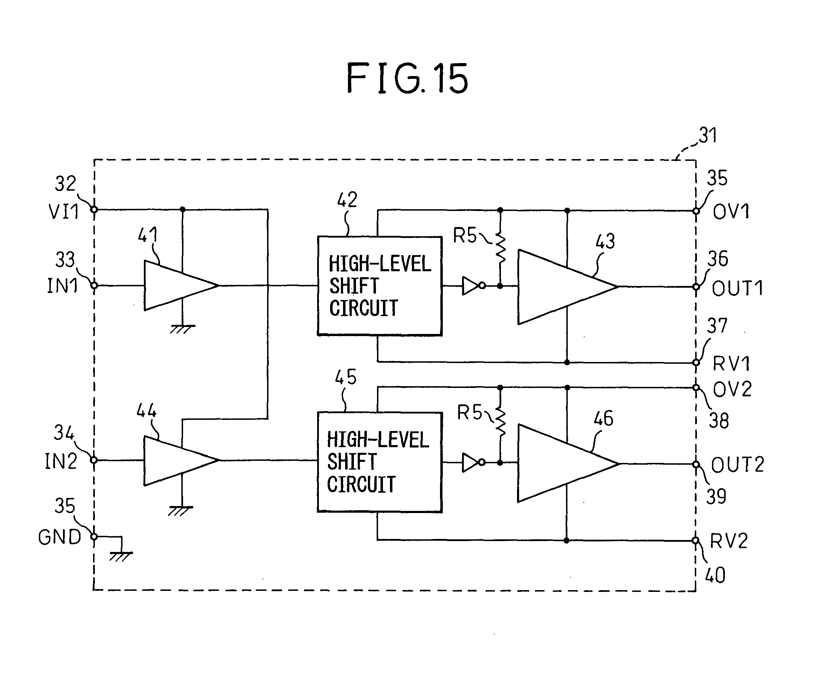

Fig.15 is a diagram showing another configuration example of the power transistor drive IC to which the configuration in the second embodiment is applied. The IC is a 2-channel-input and 2-channel-output IC, which differs from the IC shown in Fig.2 and Fig.14 in that both channels have high-level shift circuits 42 and 45. Each channel has the configuration in the second embodiment shown in Fig.7. Because the two channels have the same circuit configuration, the variations in input/output delay time between the two channels (the respective differences between the respective front edges of input signals IN1 and IN2 and the respective front edges of output signals OUT1 and OUT2) can be further reduced compared to the IC shown in Fig.2 and Fig.14.

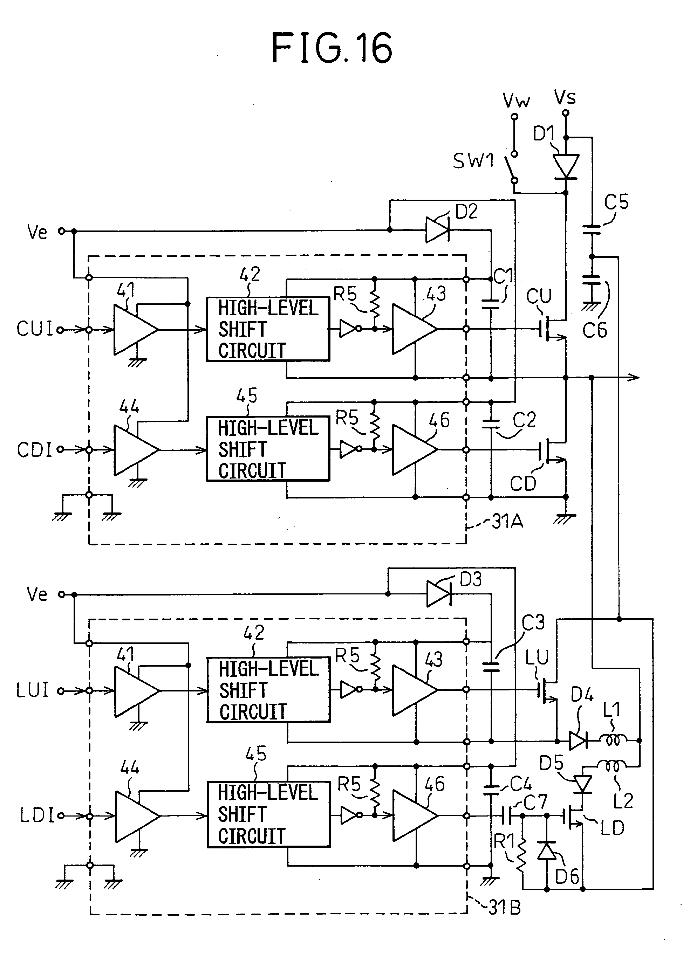

Fig.16 is a diagram showing the configuration when the power transistor drive IC shown in Fig.15 is applied to the X electrode drive circuit 3 and the Y electrode drive circuit 5 of the plasma display apparatus, corresponding to Fig.14. Power transistor drive ICs 31A and 31B are the IC shown in Fig.15. In this circuit, in addition to the effect that can be obtained from the circuit shown in Fig.14, the difference in delay time between the drive pulses supplied to the output devices CU and CD and the difference in delay time between the drive pulses supplied to the output devices LU and LD can be reduced. As a result, the timing of switching operation can be set more precisely to enable operations at a higher speed and therefore the number of sustain pulses can be increased and the display luminance can be improved.

It is also possible to apply the configuration explained in the first and third to sixth embodiments to the IC shown in Fig.15 and to the sustain circuit shown in Fig.16.

As described above, according to embodiments of the present invention, it is possible to prevent the destruction of output devices by preventing malfunctions when the power is turned on.

Moreover, according to embodiments of the present invention, as the normal operation can be attained without the high-frequency capacitive device connected to the power supply terminal in the output amplifier circuit and the protective diode connected to the reference voltage terminal in the output amplifier circuit, these devices can be eliminated.

Still moreover, by applying the drive circuit for a display apparatus according to embodiments of the present invention to a plasma display apparatus, it is possible to provide a plasma display apparatus with high reliability that does not cause malfunctions when the power is turned on.

## Claims

1. A drive circuit for a display apparatus, comprising:
an input terminal;
an edge pulse generation circuit for generating an edge pulse in accordance with a front edge and a back edge of an input signal inputted from the input terminal;
a first level shift circuit for converting the front edge pulse into a pulse on the basis of an output reference voltage;
a second level shift circuit for converting the back edge pulse into a pulse on the basis of the output reference voltage;
logic circuits connected to the output terminals of the first and second level shift circuits;
a flip-flop circuit connected to the output terminal of the logic circuit;
a setup resistor connected to a signal line in the flip-flop circuit or in a post stage of the flip-flop circuit;
an output amplifier circuit connected to a post stage of the setup resistor; and
an output device connected to the output amplifier circuit, wherein:
a capacitive load of the display apparatus is driven by the output device; and
the setup resistor is connected between the power supply voltage line of the output amplifier circuit and the signal line.

2. The drive circuit for a display apparatus as set forth in claim 1, wherein:
the flip-flop circuit comprises:
a first inverter circuit to which the front edge pulse is inputted;
a first NAND circuit connected to the output terminal of the first inverter circuit;
a second inverter circuit to which the back edge pulse is inputted; and
a second NAND circuit connected to the output terminal of the second inverter circuit; and
the setup resistor is connected between the connection point of the first inverter circuit and the first NAND circuit and the power supply voltage line of the output amplifier circuit.

3. The drive circuit for a display apparatus as set forth in claim 1 or 2, further comprising a third inverter circuit provided in the post stage of the flip-flop circuit, wherein the setup resistor is connected between the output terminal of the third inverter circuit and the power supply voltage line of the output amplifier circuit.

4. The drive circuit for a display apparatus as set forth in claim 2 or 3, wherein when the output signal of the first inverter circuit is at the "High (H)" level, the output pulse output from the output amplifier circuit is at the "Low (L)" level.

5. A drive circuit for a display apparatus, comprising:
an input terminal;
an edge pulse generation circuit for generating an edge pulse in accordance with a front edge and a back edge of an input signal inputted from the input terminal;
a first level shift circuit for converting the front edge pulse into a pulse on the basis of an output reference voltage;
a second level shift circuit for converting the back edge pulse into a pulse on the basis of the output reference voltage;
logic circuits connected to the output terminals of the first and second level shift circuits;
a flip-flop circuit connected to the output terminal of the logic circuit;
an output amplifier circuit connected to a post stage of the flip-flop circuit; and
an output device connected to the output amplifier circuit, wherein:
a capacitive load of the display apparatus is driven by the output device; and
the capacitance between the output terminal of the flip-flop circuit and the power supply voltage line of the output amplifier circuit is smaller than the capacitance between the output terminal of the flip-flop circuit and the power supply voltage line for supplying the output reference voltage.

6. A drive circuit for a display apparatus, comprising:
an input terminal;
an edge pulse generation circuit for generating an edge pulse in accordance with a front edge and a back edge of an input signal inputted from the input terminal;
a first level shift circuit for converting the front edge pulse into a pulse on the basis of an output reference voltage;
a second level shift circuit for converting the back edge pulse into a pulse on the basis of the output reference voltage;
logic circuits connected to the output terminals of the first and second level shift circuits;
a flip-flop circuit connected to the output terminal of the logic circuit;
a setup resistor connected to a signal line in the flip-flop circuit or in a post stage of the flip-flop circuit;
an output amplifier circuit connected to a post stage of the setup resistor; and
an output device connected to the output amplifier circuit, wherein:
a capacitive load of the display apparatus is driven by the output device; and
the setup resistor is constituted of a polysilicon resistor.

7. A drive circuit for a display apparatus, comprising:
an input terminal;
an edge pulse generation circuit for generating an edge pulse in accordance with a front edge and a back edge of an input signal inputted from the input terminal;
a first level shift circuit for converting the front edge pulse into a pulse on the basis of an output reference voltage;
a second level shift circuit for converting the back edge pulse into a pulse on the basis of the output reference voltage;
logic circuits connected to the output terminals of the first and second level shift circuits;
a flip-flop circuit connected to the output terminal of the logic circuit;
an output amplifier connected to a post stage of the flip-flop circuit; and
an output device connected to the output amplifier circuit, wherein the flip-flop circuit comprises:
a first inverter circuit to which the front edge pulse is inputted;
a first NAND circuit connected to the output terminal of the first inverter circuit;
a second inverter circuit to which the back edge pulse is inputted;
a second NAND circuit connected to the output terminal of the second inverter circuit; and
a reset delay circuit provided in the previous stage or in the post stage of the second NAND circuit.

8. The drive circuit for a display apparatus as set forth in claim 7, wherein the reset delay circuit is configured of an inverter circuit.

9. The drive circuit for a display apparatus as set forth in claim 8, wherein the reset delay circuit is configured of two inverter circuits connected in series.

10. The drive circuit for a display apparatus as set forth in claim 8, wherein the reset delay circuit is configured of an input capacitor in an inverter circuit connected to the output terminal of the second NAND circuit.

11. The drive circuit for a display apparatus as set forth in claim 10, wherein the reset delay circuit is configured of input capacitors in plural inverter circuits connected to the output terminal of the second NAND circuit.

12. The drive circuit for a display apparatus as set forth in claim 7, wherein the reset delay circuit is a time constant circuit configured of a resistor and a capacitor.

13. The drive circuit for a display apparatus as set forth in claim 7, wherein the reset delay circuit is configured of a capacitor connected to the output terminal of the second NAND circuit.

14. A drive circuit for a display apparatus, comprising:
an input terminal;
an edge pulse generation circuit for generating an edge pulse in accordance with a front edge and a back edge of an input signal inputted from the input terminal;
a first level shift circuit for converting the front edge pulse into a pulse on the basis of an output reference voltage;
a second level shift circuit for converting the back edge pulse into a pulse on the basis of the output reference voltage;
logic circuits connected to the output terminals of the first and second level shift circuits;
a flip-flop circuit connected to the output terminal of the logic circuit;
an output amplifier circuit connected to a post stage of the flip-flop circuit;
an output device connected to the output amplifier circuit; and
a capacitor connected between the power supply voltage line of the output amplifier circuit and the power supply voltage line for supplying the output reference voltage and having a low frequency responsibility and a large capacitance.

15. The drive circuit for a display apparatus as set forth in any one of claims 1 to 14, wherein the logic circuit has a simultaneously active output preventing function that prevents an output signal from being generated when the output signal of the first level shift circuit and the output signal of the second level shift circuit are simultaneously in the active state.

16. The drive circuit for a display apparatus as set forth in claim 15, wherein when the output signal of the first level shift circuit and the output signal of the second level shift circuit are simultaneously at the "Low (L)" level, the signal output to the first inverter circuit from the logic circuit turns to the "Low (L)" level and the signal output to the second inverter circuit from the logic circuit turns to the "High (H)" level.

17. A plasma display apparatus, comprising:
a plurality of X electrodes;
a plurality of Y electrodes arranged, together with the plurality of X electrodes, adjacently by turns, wherein a discharge is caused to occur between the plurality of X electrodes and the plurality of Y electrodes;
an X electrode drive circuit for applying a discharge voltage to the plurality of X electrodes; and
a Y electrode drive circuit for applying a discharge voltage to the plurality of Y electrodes, wherein the X electrode drive circuit and the Y electrode drive circuit are configured of the drive circuit for a display apparatus set forth in any one of claims 1 to 16.

18. A drive circuit for a display apparatus, comprising:
a first input terminal;
a first edge pulse generation circuit for generating a first edge pulse in accordance with a first front edge and a first back edge of a first input signal inputted from the first input terminal;
a first level shift circuit for converting the first front edge pulse into a pulse on the basis of a first output reference voltage;
a second level shift circuit for converting the first back edge pulse into a pulse on the basis of the first output reference voltage;
first logic circuits connected to the output terminals of the first and second level shift circuits;
a first flip-flop circuit connected to the output terminal of the first logic circuit;
a first setup resistor connected to a first signal line in the first flip-flop circuit or in a post stage of the first flip-flop circuit;
a first output amplifier circuit connected to a post stage of the first setup resistor; and
a first output device connected to the first output amplifier circuit and supplying a high-level voltage to a capacitive load, the drive circuit for a display apparatus further comprising:
a second input terminal;
a second edge pulse generation circuit for generating a second edge pulse in accordance with a second front edge and a second back edge of a second input signal inputted from the second input terminal;
a third level shift circuit for converting the second front edge pulse into a pulse on the basis of a second output reference voltage;
a fourth level shift circuit for converting the second back edge pulse into a pulse on the basis of the second output reference voltage;
second logic circuits connected to the output terminals of the third and fourth level shift circuits;
a second flip-flop circuit connected to the output terminal of the second logic circuit;
a second setup resistor connected to a second signal line in the second flip-flop circuit or in the post stage of the second flip-flop circuit;
a second output amplifier circuit connected to the post stage of the second setup resistor; and
a second output device connected to the first output amplifier circuit and supplying a low-level voltage to a capacitive load; wherein:
the first setup resistor is connected between the first power supply voltage line of the first output amplifier circuit and the first signal line; and
the second setup resistor is connected between the second power supply voltage line of the second output amplifier circuit and the second signal line.

19. A drive circuit for a display apparatus, comprising:
a first input terminal;
a first edge pulse generation circuit for generating a first edge pulse in accordance with a first front edge and a first back edge of a first input signal inputted from the first input terminal;
a first level shift circuit for converting the first front edge pulse into a pulse on the basis of a first output reference voltage;
a second level shift circuit for converting the first back edge pulse into a pulse on the basis of the first output reference voltage;
first logic circuits connected to the output terminals of the first and second level shift circuits;
a first flip-flop circuit connected to the output terminal of the first logic circuit;
a first setup resistor connected to a first signal line in the first flip-flop circuit or in a post stage of the first flip-flop circuit;
a first output amplifier circuit connected to a post stage of the first setup resistor; and
a first output device connected to the first output amplifier circuit and supplying a high-level voltage to a capacitive load, the drive circuit for a display apparatus further comprising:
a second input terminal;
a second edge pulse generation circuit for generating a second edge pulse in accordance with a second front edge and a second back edge of a second input signal inputted from the second input terminal;
a third level shift circuit for converting the second front edge pulse into a pulse on the basis of a second output reference voltage;
a fourth level shift circuit for converting the second back edge pulse into a pulse on the basis of the second output reference voltage;
second logic circuits connected to the output terminals of the third and fourth level shift circuits;
a second flip-flop circuit connected to the output terminal of the second logic circuit;
a second setup resistor connected to a second signal line in the second flip-flop circuit or in a post stage of the second flip-flop circuit;
a second output amplifier circuit connected to a post stage of the second setup resistor; and
a second output device connected to the first output amplifier circuit and supplying a low-level voltage to a capacitive load; wherein:
the capacitance between the output terminal of the first flip-flop circuit and the first power supply voltage line of the first output amplifier circuit is smaller than the capacitance between the output terminal of the first flip-flop circuit and the power supply voltage line for supplying the first output reference voltage; and
the capacitance between the output terminal of the second flip-flop circuit and the second power supply voltage line of the second output amplifier circuit is smaller than the capacitance between the output terminal of the second flip-flop circuit and the power supply voltage line for supplying the second output reference voltage.

20. A drive circuit for a display apparatus, comprising:
a first input terminal;
a first edge pulse generation circuit for generating a first edge pulse in accordance with a first front edge and a first back edge of a first input signal inputted from the first input terminal;
a first level shift circuit for converting the first front edge pulse into a pulse on the basis of a first output reference voltage;
a second level shift circuit for converting the first back edge pulse into a pulse on the basis of the first output reference voltage;
first logic circuits connected to the output terminals of the first and second level shift circuits;
a first flip-flop circuit connected to the output terminal of the first logic circuit;
a first setup resistor connected to a first signal line in the first flip-flop circuit or in a post stage of the first flip-flop circuit;
a first output amplifier circuit connected to a post stage of the first setup resistor; and
a first output device connected to the first output amplifier circuit and supplying a high-level voltage to a capacitive load, the drive circuit for a display apparatus further comprising:
a second input terminal;
a second edge pulse generation circuit for generating a second edge pulse in accordance with a second front edge and a second back edge of a second input signal inputted from the second input terminal;
a third level shift circuit for converting the second front edge pulse into a pulse on the basis of a second output reference voltage;
a fourth level shift circuit for converting the second back edge pulse into a pulse on the basis of the second output reference voltage;
second logic circuits connected to the output terminals of the third and fourth level shift circuits;
a second flip-flop circuit connected to the output terminal of the second logic circuit;
a second setup resistor connected to a second signal line in the second flip-flop circuit or in a post stage of the second flip-flop circuit;
a second output amplifier circuit connected to a post stage of the second setup resistor; and
a second output device connected to the first output amplifier circuit and supplying a low-level voltage to a capacitive load; wherein:
the first flip-flop circuit comprises:
a first inverter circuit to which the first front edge pulse is inputted;
a first NAND circuit connected to the output terminal of the first inverter circuit;
a second inverter circuit to which the first back edge pulse is inputted;
a second NAND circuit connected to the output terminal of the second inverter circuit; and
a first reset delay circuit provided in the previous stage or in the post stage of the second NAND circuit; and
the second flip-flop circuit comprises:
a third inverter circuit to which the second front edge pulse is inputted;
a third NAND circuit connected to the output terminal of the third inverter circuit;
a fourth inverter circuit to which the second back edge pulse is inputted;
a fourth NAND circuit connected to the output terminal of the fourth inverter circuit; and
a second reset delay circuit provided in the previous stage or in the post stage of the fourth NAND circuit.

21. A drive circuit for a display apparatus, being the drive circuit set forth in any one of claims 18 to 20, wherein the first input terminal, the first edge pulse generation circuit, the first level shift circuit, the second level shift circuit, the first logic circuit, the first flip-flop circuit, the first setup resistor, the first output amplifier circuit, the second input terminal, the second edge pulse generation circuit, the third level shift circuit, the fourth level shift circuit, the second logic circuit, the second flip-flop circuit, the second setup resistor, and the second output amplifier circuit are formed on the same semiconductor integrated circuit.

22. A plasma display apparatus, comprising:
a plurality of X electrodes;
a plurality of Y electrodes arranged, together with the plurality of X electrodes, adjacently by turns, wherein a discharge is caused to occur between the plurality of X electrodes and the plurality of Y electrodes;
an X electrode drive circuit for applying a discharge voltage to the plurality of X electrodes; and
a Y electrode drive circuit for applying a discharge voltage to the plurality of Y electrodes, wherein the X electrode drive circuit and the Y electrode drive circuit are configured of the drive circuit for a display apparatus set forth in any one of claims 18 to 21.
